# EUROPEAN PATENT APPLICATION

(11) **EP 4 549 485 A1**
(43) Date of publication of application: **07.05.2025**
(21) Application number: 23306883.2
(22) Date of filing: 30.10.2023
(51) Int. Cl.: C08G 59/42, C08L 63/00

(54) **BIOBASED EPOXY THERMOSET MATERIALS**

(71) Applicant: Centre National de la Recherche Scientifique, 75016 Paris (FR); Université Côte d'Azur, 06100 Nice Cedex 2 (FR)
(72) Inventor: Roxana-Mihaela, DINU, 06000 NICE (FR); Alice-Cristina, MIJA, 06100 NICE (FR)
(74) Representative: IPAZ

(57) **Abstract**

The present invention relates to a thermoset resin composition comprising a) at least one aromatic multifunctional epoxy monomer; and b) at least two different anhydride monomers selected from the group consisting of MNA, THPA, 2DSA, HHPA, GA, HMPA, PhA, SA, DMGA, OSA, MA, PEAMA, TA, and IA. The invention also relates to a method for preparing said thermoset resin composition, a recyclable, reparable, and reprocessable thermoset resin obtained from said thermoset resin composition, and a thermoset material or bio-composite obtained from said thermoset resin composition. The thermoset resins of the invention have high biobased carbon content of more than 99.5 %, high glass transition values of more than 130 °C, high storage moduli of more than 2.5 GPa at 25 °C, high thermal stability (*T*_{5%}-air) of more than 300 °C, a density of less than 1.3 g/cm³, and very low water absorption values of less than 0.5% after 24 hours.

## Description

### FIELD OF THE INVENTION

The present invention relates to recyclable, reparable, and reprocessable biobased epoxy thermoset materials with high physicochemical and thermomechanical properties obtained from sustainable epoxy resins. The present invention can be used as structural materials, as coatings, as adhesives, binders or as matrix in composites production in industrial areas such as construction, electronics, automotive, naval, aerospace and space.

### TECHNICAL BACKGROUND

The continuous effort for progress leads to the rise of new and numerous engineering challenges. In recent years polymeric materials have become increasingly attractive to a growing number of industrial sectors. Nowadays, thermosetting polymers represent about 20% of plastic production and are widely used within engineering fields. Epoxy resins are one of the most used thermosetting systems due to their high mechanical properties, good thermal and dimensional stabilities, processability, and compatibility with other polymers or reinforcing fillers or fibers. Such features make their use feasible to a broad range of applications such as composites, coatings, adhesives, binders, and structural materials in civil infrastructures and in automotive, electronics, naval, aerospace and space industries.

It is known that over 90% of these epoxy materials are based on the reaction of bisphenol A (BPA) and epichlorohydrin, producing diglycidyl ether of bisphenol A (DGEBA). Bisphenol A is a petrochemical compound which appears to be an estrogenic receptor antagonist. Therefore, BPA has been classified as a carcinogenic, mutagen and reprotoxic (CMR), being submitted to restrictive regulations in numerous countries.

Focusing on aerospace and space applications, it is known that thermosets used in these fields have performant thermomechanical properties, resistance to moisture absorption, good compatibility with substrates and fibers, etc. For example, if the glass transition (*T*_{g}) values are in the range between -50 °C and 60 °C for the thermosets used in different components in the aeronautical industry, for the space environment the *T*_{g} values are ranged between -150 °C and 150 °C.

Depending on the application, materials used in these fields should exceed these upper temperature limits for a higher resistance of components manufactured over time and to special environments.

Biobased epoxy thermoset resins from aromatic biobased epoxy monomers copolymerized with a biobased anhydride were already developed by the present inventors. For example, in the article ACS Appl. Polym. Mater. 2022*,* biobased epoxy thermosets resins comprising diglycidyl ether of vanillyl alcohol (DGEVA) or triglycidyl ether of phloroglucinol (TGPh) as epoxy monomers were crosslinked with hexahydro-4-methylphtalic anhydride (HMPA) or methyl nadic anhydride (MNA) as crosslinking agents. The article Green Chem. Issue 6, 2023, discloses biobased epoxy thermosets resins comprising a combination of TGPh and triglycidyl ether of naringenin (TGEN) as epoxy monomers, and maleic anhydride (MA), phthalic anhydride (PhA / PA), succinic anhydride (SA), cis-1,2,3,6-tetrahydrophthalic anhydride (THPA), or trimellitic anhydride (TA), as curing agents. The article Polymers 2022, discloses biobased epoxy thermosets resins comprising tris(4-hydroxyphenyl)methane triglycidyl ether (THPMTGE) as epoxy monomer and hexahydrophthalic anhydride (HHPA), HMPA, MNA or THPA as crosslinkers. Finally, the article ACS Appl. Polym. Mater. 2023, 5, 4, 2542-2552 discloses a thermosetting resin synthesized by combining TGPh as epoxy monomer with HMPA as curing agent. All these resins enable materials with high biobased carbon content, high glass transition values, high storage moduli, high thermal stability, and very low water absorption.

However, there is a need for developing biobased thermoset materials even more efficient for industrial purposes. In particular, there is a need for developing materials with higher thermomechanical, chemical and environmental stability, improved Newtonian behavior, lower water absorption, and improved recyclability.

### SUMMARY OF THE INVENTION

The inventors have found that thermoset resins based on at least one aromatic biobased epoxy monomer and at least two distinct anhydrides crosslinkers have better physicochemical and thermomechanical properties than the thermoset resins disclosed in the art, in particular resins based on only one anhydride curing agent.

High glass transition, high storage moduli, high thermal stability, low water absorption values and high recyclability are crucial criteria of high performant materials. The thermoset resins of the invention have at least two, preferably at least three, four or five, more preferably all, of the following properties: high biobased carbon content of more than 99.5 %, high glass transition values of more than 130 °C, high storage moduli of more than 2.5 GPa at 25 °C, high thermal stability (*T*_{5%}-air) of more than 300 °C, a density of less than 1.3 g/cm³, and very low water absorption values of less than 0.5%, preferably less than 0.3%, after 24 hours. In addition, the resin of the invention can be mechanically and/or chemically recycled, reprocessed, and repaired.

These performances are suitable for application in space, aerospace, naval, electronics industry for example.

Besides, the combination of at least two distinct anhydride monomers enables a better viscosity of the thermoset resin composition and higher crosslinking rate. The better viscosity results in a better Newtonian behavior of the resin composition and in composite materials with higher performance. The very high crosslinking rate results in a better stability of the three-dimensional structure.

One aspect of the invention is a thermoset resin composition comprising:
a. at least one aromatic multifunctional epoxy monomer; and
b. at least two different anhydrides hardeners selected from the group consisting of methyl nadic anhydride (MNA), cis-1,2,3,6-tetrahydrophthalic anhydride (THPA), (2-dodecen-1-yl)succinic anhydride (2DSA), hexahydrophthalic anhydride (HHPA), glutaric anhydride (GA), hexahydro-4-methylphtalic anhydride (HMPA), phthalic anhydride (PhA or PA), succinic anhydride (SA), 3,3-dimethylglutaric anhydride (DMGA), 1-octenylsuccinic anhydride (OSA), maleic anhydride (MA), polyethylene-alt-maleic anhydride) (PEAMA), trimellitic anhydride (TA), and itaconic anhydride (IA).

Another aspect of the invention is a method for preparing a thermoset resin composition comprising the steps of reacting a) at least one aromatic multifunctional epoxy monomer with b) at least two different anhydride monomers selected from the group consisting of methyl nadic anhydride (MNA), cis-1,2,3,6-tetrahydrophthalic anhydride (THPA), (2-dodecen-1-yl)succinic anhydride (2DSA), hexahydrophthalic anhydride (HHPA), glutaric anhydride (GA), hexahydro-4-methylphtalic anhydride (HMPA), phthalic anhydride (PhA or PA), succinic anhydride (SA), 3,3-dimethylglutaric anhydride (DMGA), 1-octenylsuccinic anhydride (OSA), maleic anhydride (MA), poly(ethylene-alt-maleic anhydride) (PEAMA), trimellitic anhydride (TA), and itaconic anhydride (IA).

Another aspect of the invention is a biobased thermoset resin or material comprising a cured thermoset resin composition of the invention.

Another aspect of the invention is a bio-composite material comprising a cured thermoset resin composition of the invention.

### DETAILED DESCRIPTION OF THE INVENTION

### Thermoset resin composition

One aspect of the invention is a thermoset resin composition comprising:
a. at least one aromatic multifunctional epoxy monomer; and
b. at least two different anhydride monomers selected from the group consisting of methyl nadic anhydride (MNA), cis- 1,2,3,6-Tetrahydrophthalic anhydride (THPA), (2-dodecen-1-yl)succinic anhydride (2DSA), hexahydrophthalic anhydride (HHPA), glutaric anhydride (GA), hexahydro-4-methylphtalic anhydride (HMPA), phthalic anhydride (PhA or PA), succinic anhydride (SA), 3,3-dimethylglutaric anhydride (DMGA), 1-octenylsuccinic anhydride (OSA), maleic anhydride (MA), poly(ethylene-alt-maleic anhydride) (PEAMA), trimellitic anhydride (TA), and itaconic anhydride (IA).

As used herein, the expression "resin composition" or "thermoset resin composition" refers to a composition typically in the form of a liquid/ viscous solution, which can be converted into a resin by curing. The resin composition comprises monomers or prepolymers and optionally at least one initiator.

Preferably, both monomers a) and b) are biobased. In the context of the invention, a biobased monomer refers to a monomer obtained from renewable, non-edible, resources such as algae, bacteria, microorganisms, plants, industrial wastes, etc.

In the context of the invention, the expression "aromatic multifunctional epoxy monomer" refers to an aromatic monomer comprising more than one epoxide functional group. Preferably, the aromatic monomer comprises two or three epoxide functional groups. The IUPAC name for an epoxide group is an oxirane. The structure of the epoxide group is shown in formula (I) below: 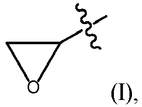 in which 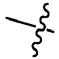 denotes the bond by which said epoxide function is attached to the remainder of the epoxy monomer.

In a particular embodiment, the aromatic epoxy monomer is selected from the group consisting of triglycidyl ether of phloroglucinol (TGPh), triglycidyl ether of naringenin (TGEN), diglycidyl ether of vanillyl alcohol (DGEVA), tris(4-hydroxyphenyl)methane triglycidyl ether (THPMTGE), resorcinol diglycidyl ether (RDGE), and diglycidyl 1.2-cyclohexanedicarboxylate (DGPH).

Preferably, the aromatic epoxy monomer is selected from the group consisting of TGPh, TGEN, DGEVA, and RDGE. More preferably, the aromatic epoxy monomers are TGPh and TGEN.

The molecular weight of the aromatic epoxy monomer is not particularly limited. Typically, said molecular weight is comprised between 220-550 g/mol.

In principle, the aromatic multifunctional epoxy monomers used in the development of this invention are preferably classified as safe to humans, nature, and water exposure.

Preferably, the aromatic multifunctional epoxy monomer derives from natural, not edible, and renewable building blocks extracted from algae, bacteria, microorganisms, plants, etc. Most preferably, the aromatic multifunctional epoxy monomer derives from natural industrial side products or wastes, and is financially accessible.

In the context of the invention, the anhydride monomers are used as hardener in the resin composition. As used herein, the expression "anhydride monomer" refers to monomer comprising anhydride functional group, in particular an acid anhydride functional group. The acid anhydride functional group comprises two acyl groups bonded to the same oxygen atom. In the context of the invention, the anhydride monomers are preferably cyclic anhydride monomers.

The thermoset resin composition of the invention comprises at least two different anhydride monomers, preferably at least two different cyclic anhydride monomers. Preferably, the thermoset resin composition of the invention comprises at least two different anhydride monomers selected from the group consisting of methyl nadic anhydride (MNA), cis-1,2,3,6-tetrahydrophthalic anhydride (THPA), (2-dodecen-1-yl)succinic anhydride (2DSA), hexahydrophthalic anhydride (HHPA), glutaric anhydride (GA), hexahydro-4-methylphtalic anhydride (HMPA), phthalic anhydride (PhA or PA), succinic anhydride (SA), 3,3-dimethylglutaric anhydride (DMGA), 1-octenylsuccinic anhydride (OSA), maleic anhydride (MA), poly(ethylene-alt-maleic anhydride) (PEAMA), trimellitic anhydride (TA), and itaconic anhydride (IA).

In a particular embodiment, the thermoset resin composition of the invention comprises from 2 to 4, preferably 2 or 3, different anhydride monomers.

In a preferred embodiment, the thermoset resin composition of the invention comprises two or three different anhydride monomers selected from the group consisting of methyl nadic anhydride (MNA), cis-1,2,3,6-tetrahydrophthalic anhydride (THPA), (2-dodecen-1-yl)succinic anhydride (2DSA), hexahydrophthalic anhydride (HHPA), glutaric anhydride (GA), hexahydro-4-methylphtalic anhydride (HMPA), phthalic anhydride (PhA or PA), succinic anhydride (SA), 3,3-dimethylglutaric anhydride (DMGA), 1-octenylsuccinic anhydride (OSA), maleic anhydride (MA), poly(ethylene-alt-maleic anhydride) (PEAMA), trimellitic anhydride (TA), and itaconic anhydride (IA).

Preferably, the first and the second anhydride monomers b) are selected from the group consisting of THPA, PA, SA, MA, GA, PEAMA, TA, and IA, preferably MA, IA, THPA, SA. Likewise, the first, the second and the third anhydride monomers are preferably selected from the group consisting of THPA, PA, SA, MA, GA, PEAMA, TA, and IA, preferably MA, IA, THPA, SA.

Preferably, the first anhydride monomer b) is selected from the group consisting of MA, SA, TA, THPA, PA, and IA. In particular, the first anhydride monomer is MA, SA, TA, THPA, PA, and IA, and the second anhydride monomer is PEAMA. In another embodiment, the first and the second anhydride monomers are selected from the group consisting of MA, SA, TA, THPA, PA, and IA, and the third anhydride monomer is PEAMA.

Preferably, the thermoset resin composition comprises TGPh as epoxy monomer a); a first anhydride monomer b) selected from the group consisting of MA, SA, TA, THPA, PA, and IA; and a second anhydride monomer b) being PEAMA. Likewise, the thermoset resin composition can comprise TGPh as epoxy monomer a); a first anhydride monomer b) selected from the group consisting of MA, SA, TA, THPA, PA, and IA; a second anhydride monomer b) selected from the group consisting of MA, SA, TA, THPA, PA, and IA; and a third anhydride monomer b) being PEAMA; provided that the first and the second anhydride monomers are different from each other.

In another particular embodiment of the invention, the thermoset resin composition comprises:
a) MA as the first anhydride monomer, and a second anhydride monomer selected from the group consisting of SA, THPA, PA, and IA; or
b) SA as the first anhydride monomer, and a second anhydride monomer selected from the group consisting of MA, THPA, PA, and IA; or
c) THPA as the first anhydride monomer, and a second anhydride monomer selected from the group consisting of MA, SA, PA, and IA; or
d) PA as the first anhydride monomer, and a second anhydride monomer selected from the group consisting of MA, SA, THPA, and IA; or
e) IA as the first anhydride monomer, and a second anhydride monomer selected from the group consisting of MA, SA, PA, and THPA.

When the thermoset resin composition comprises two anhydride monomers, the weight ratio of the first and the second anhydride monomers is preferably from 5:95 to 95:5, preferably from 10:90 to 90: 10, preferably from 20:80 to 80:20, more preferably from 25:75 to 75:25. In a particular embodiment of the invention, the weight ratio of the first and the second anhydride monomers is 50:50.

When the thermoset resin composition comprises three anhydride monomers, the weight ratio of the anhydride monomers one, two and three is preferably as follows:
a) from 17.5:77.5:5 to 77.5: 17.5:5; or
b) from 15:75:10 to 75:15:10; or
c) from 27.5:67.5:5 to 67.5:27.5:5; or
d) from 25:65:10 to 65:25:10; or
e) from 22.5:72.5:5 to 72.5:22.5:5; or
f) from 20:70: 10 to 70:20:10; or
g) from 47.5:47.5:5 to 45:45: 10.

It is preferable for the anhydrides to be liquid, or to have a melting point feasible for industrial processing, in particular of at most 150 °C, or to form a eutectic mixture with the other anhydrides.

Preferably, the cyclic anhydride monomer derives from natural and renewable building blocks extracted from various natural sources.

In a particular embodiment, the thermoset resin composition of the invention comprises:
a) TGPh as epoxy monomer;
b) MA as the first anhydride monomer; and a second anhydride monomer selected from the group consisting of SA, THPA, PA, and IA.

In another particular embodiment, the thermoset resin composition of the invention comprises:
a) TGPh as epoxy monomer;
b) MA as the first anhydride monomer; a second anhydride monomer selected from the group consisting of SA, THPA, PA, and IA; and PEAMA as a third anhydride monomer.

In another particular embodiment, the thermoset resin composition of the invention comprises:
a) TGPh as epoxy monomer;
b) SA as the first anhydride monomer, and a second anhydride monomer selected from the group consisting of MA, THPA, PA, and IA.

In another particular embodiment, the thermoset resin composition of the invention comprises:
a) TGPh as epoxy monomer;
b) SA as the first anhydride monomer, and a second anhydride monomer selected from the group consisting of MA, THPA, PA, and IA; and PEAMA as a third anhydride monomer.

In another particular embodiment, the thermoset resin composition of the invention comprises:
a) TGPh as epoxy monomer;
b) THPA as the first anhydride monomer, and a second anhydride monomer selected from the group consisting of MA, SA, PA, and IA.

In another particular embodiment, the thermoset resin composition of the invention comprises:
a) TGPh as epoxy monomer;
b) THPA as the first anhydride monomer, a second anhydride monomer selected from the group consisting of MA, SA, PA, and IA; and PEAMA as a third anhydride monomer.

In another particular embodiment, the thermoset resin composition of the invention comprises:
a) TGPh as epoxy monomer;
b) PA as the first anhydride monomer, and a second anhydride monomer selected from the group consisting of MA, SA, THPA, and IA.

In another particular embodiment, the thermoset resin composition of the invention comprises:
a) TGPh as epoxy monomer;
b) PA as the first anhydride monomer, a second anhydride monomer selected from the group consisting of MA, SA, THPA, and IA; and PEAMA as a third anhydride monomer.

In another particular embodiment, the thermoset resin composition of the invention comprises:
a) TGPh as epoxy monomer;
b) IA as the first anhydride monomer, and a second anhydride monomer selected from the group consisting of MA, SA, PA, and THPA.

In another particular embodiment, the thermoset resin composition of the invention comprises:
a) TGPh as epoxy monomer;
b) IA as the first anhydride monomer; a second anhydride monomer selected from the group consisting of MA, SA, PA, and THPA; and PEAMA as a third anhydride monomer.

In another particular embodiment, the thermoset resin composition of the invention comprises:
a) TGEN as epoxy monomer;
b) MA as the first anhydride monomer, and a second anhydride monomer selected from the group consisting of SA, THPA, PA, and IA.

In another particular embodiment, the thermoset resin composition of the invention comprises:
a) TGEN as epoxy monomer;
b) MA as the first anhydride monomer; a second anhydride monomer selected from the group consisting of SA, THPA, PA, and IA; and PEAMA as a third anhydride monomer.

In another particular embodiment, the thermoset resin composition of the invention comprises:
a) TGEN as epoxy monomer;
b) SA as the first anhydride monomer, and a second anhydride monomer selected from the group consisting of MA, THPA, PA, and IA.

In another particular embodiment, the thermoset resin composition of the invention comprises:
a) TGEN as epoxy monomer;
b) SA as the first anhydride monomer; a second anhydride monomer selected from the group consisting of MA, THPA, PA, and IA; and PEAMA as a third anhydride monomer.

In another particular embodiment, the thermoset resin composition of the invention comprises:
a) TGEN as epoxy monomer;
b) THPA as the first anhydride monomer, and a second anhydride monomer selected from the group consisting of MA, SA, PA, and IA.

In another particular embodiment, the thermoset resin composition of the invention comprises:
a) TGEN as epoxy monomer;
b) THPA as the first anhydride monomer; a second anhydride monomer selected from the group consisting of MA, SA, PA, and IA; and PEAMA as a third anhydride monomer.

In another particular embodiment, the thermoset resin composition of the invention comprises:
a) TGEN as epoxy monomer;
b) PA as the first anhydride monomer, and a second anhydride monomer selected from the group consisting of MA, SA, THPA, and IA.

In another particular embodiment, the thermoset resin composition of the invention comprises:
a) TGEN as epoxy monomer;
b) PA as the first anhydride monomer; a second anhydride monomer selected from the group consisting of MA, SA, THPA, and IA; and PEAMA as a third anhydride monomer.

In another particular embodiment, the thermoset resin composition of the invention comprises:
a) TGEN as epoxy monomer;
b) IA as the first anhydride monomer, and a second anhydride monomer selected from the group consisting of MA, SA, PA, and THPA.

In another particular embodiment, the thermoset resin composition of the invention comprises:
a) TGEN as epoxy monomer;
b) IA as the first anhydride monomer; a second anhydride monomer selected from the group consisting of MA, SA, PA, and THPA; and PEAMA as a third anhydride monomer.

In another particular embodiment, the thermoset resin composition of the invention comprises:
a) DGEVA as epoxy monomer;
b) MA as the first anhydride monomer, and a second anhydride monomer selected from the group consisting of SA, THPA, PA, and IA.

In another particular embodiment, the thermoset resin composition of the invention comprises:
a) DGEVA as epoxy monomer;
b) MA as the first anhydride monomer; a second anhydride monomer selected from the group consisting of SA, THPA, PA, and IA; and PEAMA as a third anhydride monomer.

In another particular embodiment, the thermoset resin composition of the invention comprises:
a) DGEVA as epoxy monomer;
b) SA as the first anhydride monomer, and a second anhydride monomer selected from the group consisting of MA, THPA, PA, and IA.

In another particular embodiment, the thermoset resin composition of the invention comprises:
a) DGEVA as epoxy monomer;
b) SA as the first anhydride monomer; a second anhydride monomer selected from the group consisting of MA, THPA, PA, and IA; and PEAMA as a third anhydride monomer.

In another particular embodiment, the thermoset resin composition of the invention comprises:
a) DGEVA as epoxy monomer;
b) THPA as the first anhydride monomer, and a second anhydride monomer selected from the group consisting of MA, SA, PA, and IA.

In another particular embodiment, the thermoset resin composition of the invention comprises:
a) DGEVA as epoxy monomer;
b) THPA as the first anhydride monomer; a second anhydride monomer selected from the group consisting of MA, SA, PA, and IA; and PEAMA as a third anhydride monomer.

In another particular embodiment, the thermoset resin composition of the invention comprises:
a) DGEVA as epoxy monomer;
b) PA as the first anhydride monomer, and a second anhydride monomer selected from the group consisting of MA, SA, THPA, and IA.

In another particular embodiment, the thermoset resin composition of the invention comprises:
a) DGEVA as epoxy monomer;
b) PA as the first anhydride monomer; a second anhydride monomer selected from the group consisting of MA, SA, THPA, and IA; and PEAMA as a third anhydride monomer.

In another particular embodiment, the thermoset resin composition of the invention comprises:
a) DGEVA as epoxy monomer;
b) IA as the first anhydride monomer, and a second anhydride monomer selected from the group consisting of MA, SA, PA, and THPA.

In another particular embodiment, the thermoset resin composition of the invention comprises:
a) DGEVA as epoxy monomer;
b) IA as the first anhydride monomer; a second anhydride monomer selected from the group consisting of MA, SA, PA, and THPA; and PEAMA as a third anhydride monomer.

In another particular embodiment, the thermoset resin composition of the invention comprises:
a) RDGE as epoxy monomer;
b) MA as the first anhydride monomer, and a second anhydride monomer selected from the group consisting of SA, THPA, PA, and IA.

In another particular embodiment, the thermoset resin composition of the invention comprises:
a) RDGE as epoxy monomer;
b) MA as the first anhydride monomer; a second anhydride monomer selected from the group consisting of SA, THPA, PA, and IA; and PEAMA as a third anhydride monomer.

In another particular embodiment, the thermoset resin composition of the invention comprises:
a) RDGE as epoxy monomer;
b) SA as the first anhydride monomer, and a second anhydride monomer selected from the group consisting of MA, THPA, PA, and IA.

In another particular embodiment, the thermoset resin composition of the invention comprises:
a) RDGE as epoxy monomer;
b) SA as the first anhydride monomer; a second anhydride monomer selected from the group consisting of MA, THPA, PA, and IA; and PEAMA as a third anhydride monomer.

In another particular embodiment, the thermoset resin composition of the invention comprises:
a) RDGE as epoxy monomer;
b) THPA as the first anhydride monomer, and a second anhydride monomer selected from the group consisting of MA, SA, PA, and IA.

In another particular embodiment, the thermoset resin composition of the invention comprises:
a) RDGE as epoxy monomer;
b) THPA as the first anhydride monomer; a second anhydride monomer selected from the group consisting of MA, SA, PA, and IA; and PEAMA as a third anhydride monomer.

In another particular embodiment, the thermoset resin composition of the invention comprises:
a) RDGE as epoxy monomer;
b) PA as the first anhydride monomer, and a second anhydride monomer selected from the group consisting of MA, SA, THPA, and IA.

In another particular embodiment, the thermoset resin composition of the invention comprises:
a) RDGE as epoxy monomer;
b) PA as the first anhydride monomer, and a second anhydride monomer selected from the group consisting of MA, SA, THPA, and IA; and PEAMA as a third anhydride monomer.

In another particular embodiment, the thermoset resin composition of the invention comprises:
a) RDGE as epoxy monomer;
b) IA as the first anhydride monomer, and a second anhydride monomer selected from the group consisting of MA, SA, PA, and THPA.

In another particular embodiment, the thermoset resin composition of the invention comprises:
a) RDGE as epoxy monomer;
b) IA as the first anhydride monomer; a second anhydride monomer selected from the group consisting of MA, SA, PA, and THPA; and PEAMA as a third anhydride monomer.

The molar ratio between the reactive groups (also named functional groups) of the aromatic multifunctional epoxy monomer and those of the anhydrides in the resin composition of the invention is advantageously from 0.5 to 1.5, preferably from 0.8 to 1. Advantageously, the molar ratio of epoxy functional groups: anhydride functional groups is 1:0.8, 1:1.5, or 1:1, preferably 1:1.

Preferably, the thermoset resin composition of the invention further comprises an initiator. The initiator helps initiate the chain reaction during curing. Preferably, the initiator is a tertiary amine compound. More preferably, the initiator is selected from the group consisting of 1-methylimidazole (1MIM), 2-ethyl-4-methylimidazole (2E4M), N,N-dimethylbenzylamine (BDMA). It is generally accepted in the art that the quantity of initiator to be used depends on the reagents used and in particular on their reactivity. In the context of the invention, the amount of initiator in the thermoset resin composition can be, in particular, from 0.1 to 5 wt.% of the total resin composition.

In principle, the initiators used in the development of this invention are classified as safe to humans, nature, and water exposure.

The thermoset resin composition of the invention can further comprise any suitable solvent, for instance a solvent chosen among alcohols (such as methanol, ethanol, propanol, isopropanol), ethers, ketones (such as a linear or cyclic ketone, for instance acetone or cyclohexanone), alkanes (such as a linear or cyclic alkane, for instance hexane or cyclohexane), and aromatic hydrocarbons (such as toluene). Preferably, the resin composition of the invention does not comprise any solvent.

The thermoset resin composition of the invention can further comprise any suitable additives, in particular additives that are usually comprised in epoxy resins. For instance, the composition of the invention may further one or more additives chosen from organic or inorganic fillers (such as organic or inorganic nanoparticles, for instance such as TiO₂, SiO₂, metal nanoparticles, clays), surfactants, pigments, or colorants.

The resin composition of the invention can be prepared by mixing in any order the epoxy and anhydride components comprised therein. If one of the components is solid, then the mixture is preferably heated until the compound melts and a homogeneous mixture is formed. In the case of systems containing initiators, the epoxy : resin mixture is preferably cooled to room temperature and then the required amount of initiators is added. The mixing can typically be carried out at room temperature, preferably for a duration comprised between 1 hour and 10 days, for instance between 1h and 5 days. As used herein, the expression "room temperature" refers to a temperature comprised between 15 °C and 30 °C, preferably between 18 °C and 25 °C. The resin composition of the invention is advantageously liquid or semi-liquid to viscous mix like a paste.

The resin composition advantageously has an inherent viscosity at room temperature of 2-250 Pa.s, preferably 30-200 Pa.s, when it is measured by rheology test using a plane-plane geometry, at a frequency of 1.0 Hz and a deformation of 1% amplitude.

### Thermoset resins / materials

As used herein, the expression "thermoset resin" or "thermoset material" refers to the resin/material obtained by irreversibly curing the resin composition of the invention. The curing can be carried out by means commonly known by the one skilled in the art such as by heat or suitable radiation.

For example, the curing step can be carried out at room temperature, at a settled temperature in an oven, in a press or in another equipment that generates heat. The curing step can also be performed under the influence of UV rays. The curing temperature is preferably between 60 °C and 200 °C. Curing results in chemical reactions that create crosslinking between polymer chains through the formation of covalent bonds between individual chains of the polymer.

Hence, another object of the invention is a method for preparing a thermoset resin comprising a step of preparing a thermoset resin composition by mixing a) at least one aromatic multifunctional epoxy monomer with b) at least two different anhydride monomers selected from the group consisting of methyl nadic anhydride (MNA), cis-1,2,3,6-tetrahydrophthalic anhydride (THPA), (2-dodecen-1-yl)succinic anhydride (2DSA), hexahydrophthalic anhydride (HHPA), glutaric anhydride (GA), hexahydro-4-methylphtalic anhydride (HMPA), phthalic anhydride (PhA or PA), succinic anhydride (SA), 3,3-dimethylglutaric anhydride (DMGA), 1-octenylsuccinic anhydride (OSA), maleic anhydride (MA), poly(ethylene-alt-maleic anhydride) (PEAMA), trimellitic anhydride (TA), and itaconic anhydride (IA); and a curing step.

Preferably, the step of reacting monomers a) and b) is carried out using an initiator the initiator such as a tertiary amine compound. More preferably, the initiator is selected from the group consisting of 1-methylimidazole (1MIM), 2-ethyl-4-methylimidazole (2E4M), or N,N-dimethylbenzylamine (BDMA).

In particular, the thermoset resin composition used in the method of the invention is as defined above in this description.

Generally speaking, the conditions of the curing step can be similar to the conditions used in known preparation method of known epoxy resins. For instance, the curing step can be carried out by heat.

Typically, the prepared resin composition of the invention can be poured in molds, such as silicon or metallic molds, and then cured in an oven. A post-curing step can be carried out to complete the reaction.

In the context of the invention, the method of the invention thus preferably comprises at least one curing step by heat, preferably in an oven, in particular at a temperature between 60 °C and 200 °C.

In a particular embodiment, the method of the invention comprises a first curing step at a temperature between 60 and 150 °C, and a second curing step (post-curing step) at a temperature between 150 °C and 180 °C. Optionally, a third curing step can be carried out at a temperature between 180 and 200 °C.

Usually, the crosslinking process of the resin composition prepared according to the invention takes place at a standard pressure of 1 atm and, is conducted in an environment characterized by the absence of water vapor in the vicinity, mitigating any potential interaction with the compounds and material.

The necessary time for the curing step varies depending on the composition of the invention, varying between 2 and 10 hours. In particular embodiment, the method of the invention comprises a first curing step from 30 minutes to 4 hours, and a second curing step (post-curing step) from 1 hour to 3 hours. Optionally, a third curing step can be carried out from 30 minutes to 3 hours.

The method according to the invention results in a high-performance biobased thermoset resin (or equivalently, polymer) that has high physicochemical and thermomechanical properties. The resin/material according to the present invention can be used in industrial areas such as construction, electronics, automotive, naval, aerospace, and space.

Another object of the invention is thus a thermoset resin or material comprising a cured thermoset resin composition of the invention.

Another objection of the invention is also a bio-composite material comprising a thermoset resin composition of the invention. For instance, the bio-composite material can be prepared by mixing or applying the thermoset resin composition with/to reinforcing fibers, and curing the material to form a thermoset bio-composite material. Hence, the bio-composite material according to the invention preferably comprises a cured thermoset resin of the invention and reinforcing fibers.

In the context of the invention, the thermoset resin/material or the bio-composite material preferably has high biobased carbon content of more than 99.5 %, high glass transition values of at least 130 °C, high storage moduli (Young modulus) of at least 2.5 GPa at 25 °C, high thermal stability (*T*_{5%}-air) of at least 300 °C, a density of at most 1.3 g/cm³, a high fire resistance with a Limiting Oxygen Index (LOI) of at least 30 %, and very low water absorption values of less than 0.5 %, preferably at most 0.3%, after 24 hours. In addition, the resin of the invention can be mechanically and/or chemically recycled, reprocessed, and repaired.

All these parameters and their measurement methods are defined in the examples.

Another object of the invention is the use of at least two, preferably 2 or 3, anhydride monomers in a thermoset resin composition, wherein said anhydride monomers are selected from the group consisting of methyl nadic anhydride (MNA), cis-1,2,3,6-tetrahydrophthalic anhydride (THPA), (2-dodecen-1-yl)succinic anhydride (2DSA), hexahydrophthalic anhydride (HHPA), glutaric anhydride (GA), hexahydro-4-methylphtalic anhydride (HMPA), phthalic anhydride (PhA or PA), succinic anhydride (SA), 3,3-dimethylglutaric anhydride (DMGA), 1-octenylsuccinic anhydride (OSA), maleic anhydride (MA), poly(ethylene-alt-maleic anhydride) (PEAMA), trimellitic anhydride (TA), and itaconic anhydride (IA).

This invention will be better understood in light of the following examples, which are provided for illustrative purposes only.

### EXAMPLES

### Example 1: preparation and characterization of the biobased thermoset resins of the invention Materials and Methods

The laboratory synthetized biobased epoxy monomers such as triglycidyl ether of phloroglucinol (TGPh, DP = 0.229, M_{w} = 348.92 g/mol) was used as multifunctional epoxy monomers. The anhydrides like maleic anhydride (MA), succinic anhydride (SA), cis-1,2,3,6-tetrahydrophthalic anhydride (THPA), phthalic anhydride (PA), itaconic anhydride (IA), and poly(ethylene-alt-maleic anhydride) (PEAMA) were used as curing agent. N,N-dimethylbenzylamine (BDMA) or 1-methilimidazole (1MIM) were used as initiator. All compounds were used as received, without any prior purification or modification.

TGPh was laboratory-synthesized by glycidylation of phloroglucinol hydroxyl groups following the patented methods such as: Tess, R. W. H.; Calif, O. Process for Manufacture of Glycidyl Ethers of Polyhydric Phenols. US2879259A, 1959, Claire, W. E. S. Process for Preparing Epoxyalkyl Aryl Ethers. US2892849A, 1959. https://doi.org/10.1145/178951.178972, Reinking, N. H. Preparation of Monomeric Glycidyl Polyethers of Polyhydric Phenols. US2943096A, 1960. The laboratory synthesized TGPh was combined with a mixture of two or three anhydrides. A stoichiometric ratio R=1 between epoxy: anhydride groups was used. First, the multifunctional epoxy monomer was heated on a heating plate at 60 °C until the compound decreased its viscosity. The anhydride mixture was added to the epoxy compound and kept under continuous stirring until they melted, and the mixture became homogeneous. The epoxy-anhydride mixture was removed from the heating plate, cooled down to room temperature, and then combined with initiator. The mixtures were poured into silicone molds and cured in oven, following the next curing protocol:
- at 80 °C for 1 hour;
- at 150 °C for 1 hour;
- at 180 °C for 2 hours (post-curing).

The crosslinking behavior and the glass transition (*T*_{g}) temperature of the epoxy/anhydride systems were analyzed by differential scanning calorimetry (DSC). The heat flow vs. temperature evolution for fresh samples was recorded in oxidative atmosphere between 25-250 °C at a heating rate of 10 °C.min⁻¹. The presence/absence of residual heat of reaction, and the glass transition (*T*_{g}) temperature of the thermoset resins were scanned by DSC in a 0-250 °C heating/cooling cycle at a rate of 20 °C.min⁻¹.

Dynamic mechanical properties were investigated by dynamic mechanical analysis (DMA), using a three-point bending clamp. The test temperature range of the samples was between -70 °C and 300 °C applying a heating rate of 3 °C.min⁻¹. The test frequency was 1.0 Hz and the amplitude 20 µm. Shore hardness testing was performed based on ISO 7619-1, ASTM D2240, ISO 868. Five measurements for each specimen were registered and averaged for better accuracy of results. The hydrophilic/hydrophobic character of the epoxy-based resins (WA%, water absorption) was tested based on ASTM D57034 standard test method.

Thermal stability of the thermoset materials presented in this invention was investigated by thermogravimetric analysis (TGA) between 25-1000 °C (oxidative and inert atmosphere), at 10 °C.min⁻¹ heating rate. The degradation temperature was set to be the temperature at which the sample lost 5% of their mass (*T*_{5%}).

Mechanical properties were analyzed by tensile testing based on ASTM D638-08 standard. Tensile strength measurements were performed on dog-bone specimens, applying a crosshead speed of 5 mm.min⁻¹.

Mechanical recycling was achieved by applying a heat treatment under a certain pressure on the mechanical grinded thermoset resins. Chemical decomposition was performed by two different methods. In the 1^{st} method, thermoset materials were immersed in 1N NaOH aqueous solution and heated at 80 °C until complete defragmentation. In the 2^{nd} method, thermoset resins were heated at 170 °C in a mixture of 1,5,7-triazabicyclo[4.4.0 ]dec-5-ene (TBD) and ethylene glycol (EG) (0.35 mol/L TBD/EG) until complete defragmentation/dissolution.

### Results and discussions

### 1.1. Thermoset resins based on multifunctional epoxy monomer crosslinked with a mixture of two different anhydrides: TGPh-IA+PA (25:75)-1MIM (0.35%), TGPh-IA+THPA (25:75)-1MIM (0.35%), and TGPh-MA+PA (25:75)-1MIM (0.35%)

The following resins have been prepared as disclosed above:
- TGPh (as epoxy monomer) - IA+PA (25:75) (as a mixture of 2 anhydrides) - 1MIM (0.35%) (as initiator);
- TGPh (as epoxy monomer) - IA+THPA (25:75) (as a mixture of 2 anhydrides) - 1MIM (0.35%) (as initiator); and
- TGPh (as epoxy monomer) - MA+PA (25:75) (as a mixture of 2 anhydrides) - 1MIM (0.35%) (as initiator); and

Table 1 below summarizes the physico-chemical and thermo-mechanical properties of these three thermoset resins.

Based on DSC data the epoxy: anhydride reaction is displayed as a narrow and well-defined exothermic event. The maximum reaction temperature (*T*ₚₑₐₖ) varies between 135-140 °C, and the reaction temperature interval (*T*ₒₙₛₑₜ -*T*_{end}) is between 80 and 180 °C. Reaction enthalpy of the epoxy/anhydride mixtures range between 300-400 J.g⁻¹.

Based on TGA data, the thermoset resins present good thermal stability, with *T*_{5%} superior to 300 °C (ranged between 300-340 °C).

Superior mechanical properties of the resins have been revealed by the high storage modulus (*E*') at room temperature which is ranged between 3-3.5 GPa. The crosslink density (*v*) and the average molecular weight between crosslinks (*M*_{c}) of the selected systems were calculated proving the presence of very stiff systems (*v* = 8-10 mmol·cm⁻³ ; *M*_{c} = 120-150 g/mol).

Glass transition value (*T*_{g}) of the thermoset resins were determined by DSC technic (*T*_{g-DSC}) and by DMA technic (*T*_{α} - maximum temperature of the damping factor peak). The selected systems present high glass transition temperatures: *T*_{g-DSC} = 160-190 °C; T_{α} = 180-210 °C.

The rigidity of the thermoset materials has been confirmed by the Shore hardness tests with values of 89-93 SD. Materials' density respects the industrial requirements (≤ 1.3 g.cm⁻³) being ranged between 1.21-1.29 g.cm⁻³.

The water absorption (WA%) of the thermoset resins ranged between 0.12 and 0.21%, respecting the space industrial criteria (≤ 0.3%). Gel content values between 99.87-99.96% demonstrate an optimal curing of the systems. The Biobased Carbon Content (BCC) and Biobased Organic Carbon (BOC) content present very high values (BCC = 99.63% ; BOC = 99.88%).

The thermoset resins can be chemically decomposed at 170 °C in a mixture of 1,5,7-Triazabicyclo[4.4.0 ]dec-5-ene (TBD) and ethylene glycol (EG) (0.35 mol/L TBD/EG), and then recycled.

**Table 1. Example of physico-chemical and thermo-mechanical properties of three thermoset resins based on multifunctional epoxy monomer crosslinked with a mixture of two different anhydrides**

| | **TGPh-IA+PA (25:75) - 1MIM (0.35%)** | **TGPh-IA+THPA (25:75) - 1MIM (0.35%)** | **TGPh-MA+PA (25:75) - 1MIM (0.35%)** |
|---|---|---|---|
| **Tₒₙₛₑₜ -T_{end} [°C]** | **85-180** | **95-178** | **80-165** |
| **Tₚₑₐₖ [°C]** | **135** | **140** | **137** |
| **ΔH [J.g⁻¹]** | **317** | **357** | **353** |
| **Density [g/cm³]** | **1.29** | **1.21** | **1.24** |
| **Shore D hardness** | **90** | **93** | **89** |
| **E' at 25 °C [GPa]** | **3.5** | **3.4** | **3.3** |
| **E' at 250 °C [MPa]** | **141** | **114** | **149** |
| **T_{g -DSC} [°C]** | **189** | **167** | **185** |
| **T_{α} [°C]** | **193** | **180** | **207** |
| **υ [mmol·cm⁻³]** | **9.80** | **8.74** | **8.75** |
| **M_{c} [g/mol]** | **132** | **139** | **142** |
| **Young's modulus [GPa]** | **0.99** | **0.93** | **1.2** |
| **Tensile stress [MPa]** | **25.3** | **42.4** | **45.5** |
| **Elongation at break [%]** | **4.1** | **5.2** | **5.5** |
| **Specific Modulus ( E / ρ ) [10⁶·m²/s²]** | **0.77** | **0.77** | **0.97** |
| **Specific Strength ( σ / ρ ) [kN·m/kg]** | **19.61** | **35.04** | **36.7** |
| **Specific Length ( σ / ρ·g ) [km]** | **2** | **3.57** | **3.74** |
| **B [%·Pa/10¹⁰]** | **0.07** | **0.057** | **0.055** |
| **Energy at break [J]** | **0.18** | **0.51** | **0.65** |
| **T_{5%} -Air [°C]** | **317** | **333** | **319** |
| **Tₛ - Air [°C]** | **164** | **175** | **165** |
| **Gel Content [%]** | **99.88** | **99.87** | **99.96** |
| **WA% at 24h [%]** | **0.12** | **0.20** | **0.21** |
| **BCC [%]** | **99.63** | **99.63** | **99.62** |
| **BOC [%]** | **99.88** | **99.88** | **99.88** |

### 1.2. Thermoset resins based on multifunctional epoxy monomer crosslinked with a mixture of three different anhydrides: TGPh-SA+THPA (25:75)-PEAMA (5%)-1MIM (0.35%), and TGPh-IA+PA (25:75)-PEAMA (5%)-1MIM (0.35%)

The following resins have been prepared as disclosed above:
- TGPh (as epoxy monomer) - SA+THPA (25:75) - PEAMA (5%) (as a mixture of 3 anhydrides) - 1MIM (0.35%) (as initiator); and
- TGPh (as epoxy monomer) - IA+PA (25:75) - PEAMA (5%) (as a mixture of 3 anhydrides) -1MIM (0.35%) (as initiator).

Table 2 below summarizes the physico-chemical and thermo-mechanical properties of these two thermoset resins.

Based on DSC data the epoxy : anhydride reaction is displayed as a narrow and well-defined exothermic event. The maximum reaction temperature (*T*ₚₑₐₖ) varies between 130-140 °C, and the reaction temperature interval (*T*ₒₙₛₑₜ -*T*_{end}) is between 85 and 180 °C. Reaction enthalpy of the epoxy/anhydride mixtures range between 340-400 J.g⁻¹.

Based on TGA data, the thermoset resins present good thermal stability, with *T*_{5%} superior to 300 °C (ranged between 315-340 °C).

Superior mechanical properties of the resins have been revealed by the high storage modulus (*E*') at room temperature which is ranged between 2.6-3 GPa. The crosslink density (*v*) and the average molecular weight between crosslinks (*M*_{c}) of the selected systems were calculated proving the presence of very stiff systems (*v* = 10-10.5 mmol·cm⁻³ ; *M*_{c} = 110-130 g/mol).

Glass transition value (*T*_{g}) of the thermoset resins were determined by DSC technic (*T*_{g-DSC}) and by DMA technic (*T*_{α} - maximum temperature of the damping factor peak). The selected systems present high glass transition values: *T*_{g-DSC}= 150-190 °C; *T*_{α} = 160-200 °C.

The rigidity of the thermoset materials has been confirmed by the Shore hardness tests with values of 91-92 SD. Materials' density respects the industrial requirements (≤ 1.3 g.cm⁻³) being ranged between 1.22-1.29 g.cm⁻³.

The water absorption (WA%) of the thermoset resins ranged between 0.19 and 0.25%, respecting the space industrial criteria (≤ 0.3%). Gel content values between 99.89-99.97% demonstrate an optimal curing of the systems. The Biobased Carbon Content (BCC) and Biobased Organic Carbon (BOC) content present very high values (BCC = 99.82% ; BOC = 99.90%).

Thermoset resins can be mechanically recycled under temperatures from 160 °C to 250 °C and pressure from 0.5 to 2 metric tons. Additionally, the thermoset materials can be chemically decomposed in a mixture of 1,5,7-Triazabicyclo[4.4.0 ]dec-5-ene (TBD) and ethylene glycol (EG) (0.35 mol/L TBD/EG) at 170 °C, or in 1N NaOH aqueous solution at 80 °C , and then recycled.

**Table 2. Example of physico-chemical and thermo-mechanical properties of two thermoset resins based on multifunctional epoxy monomer crosslinked with a mixture of three different anhydrides**

| | **TGPh-SA+THPA (25:75) - PEAMA (5%) - 1MIM (0.35%)** | **TGPh-IA+PA (25:75)-PEAMA (5%) - 1MIM (0.35%)** |
|---|---|---|
| **Tₒₙₛₑₜ -T_{end} [°C]** | **90-170** | **85-180** |
| **Tₚₑₐₖ [°C]** | **143** | **133** |
| **ΔH [J.g⁻¹]** | **345** | **399** |
| **Density [g/cm³]** | **1.22** | **1.29** |
| **Shore D hardness** | **92** | **91** |
| **E' at 25 °C [GPa]** | **3.05** | **2.6** |
| **E' at 250 °C [MPa]** | **133** | **153** |
| **T_{g-DSC} [°C]** | **154** | **185** |
| **T_{α} [°C]** | **160** | **196** |
| **υ [mmol·cm⁻³]** | **10.4** | **10.03** |
| **M_{c} [g/mol]** | **118** | **129** |
| **Young's modulus [GPa]** | **1.3** | **1.3** |
| **Tensile stress [MPa]** | **61.8** | **6.5** |
| **Elongation at break [%]** | **6.7** | **0.7** |
| **Specific Modulus (E/ρ) [10⁶·m²/s²]** | **1.07** | **1.01** |
| **Specific Strength (σ/ρ) [kN·m/kg]** | **50.66** | **5.04** |
| **Specific Length (σ/ρ·g ) [km]** | **5.16** | **0.51** |
| **B [%·Pa/10¹⁰]** | **0.049** | **0.55** |
| **Energy at break [J]** | **0.96** | **0.01** |
| **T_{5%} -Air [°C]** | **337** | **316** |
| **Tₛ - Air [°C]** | **178** | **168** |
| **Gel Content [%]** | **99.97** | **99.89** |
| **WA% at 24h [%]** | **0.25** | **0.19** |
| **BCC [%]** | **99.82** | **99.82** |
| **BOC [%]** | **99.90** | **99.90** |

### 1.3. Other examples of bio-based thermoset resins of the invention

**Table 3. Detailed list of bio-based thermoset resins of the invention**

| **Samples** | **Tₒₙₛₑₜ** -**T_{end} [°C] (DSC)** | **Tₚₑₐₖ [°C] (DSC)** | **ΔH [J.g⁻¹] (DSC)** | **Tg [°C] (DSC)** | **WA% at 24h [%] (ASTM D570 )** |
|---|---|---|---|---|---|
| TGPh-(IA-PA 25:75)(R=1)-1MIM(0,35%) | 85-180 | 135 | 317 | 189 | 0,12 |
| TGPh-(IA-THPA 25:75)(R=1)-1MIM(0,35%) | 95-178 | 140 | 357 | 167 | 0,2 |
| TGPH-(MA-PA 25:75)(R=1)-1MIM(0,35%) | 80-165 | 137 | 353 | 185 | 0,21 |
| TGPh-(MA-THPA 25:75)(R=1)-BDMA(1%) | 90-155 | 136 | 343 | 163 | 0,23 |
| TGPh-(SA-THPA 25:75)(R=1)-PEAMA(5%)-1MIM(0,35%) | 90-170 | 143 | 345 | 154 | 0,25 |
| TGPh-(IA-PA 25:75)(R=1)-PEAMA(5%)-1MIM(0,35%) | 85-180 | 133 | 399 | 185 | 0,19 |
| TGPh-THPA (R=1)-PEAMA(10%)-1MIM(1%) | 73-182 | 122 | 318 | 142 | 0,25 |
| TGPh-THPA (R=1)-PEAMA(5%)-BDMA(1%) | 95-165 | 136 | 313 | 113 | 0,04 |
| TGPh-PA (R=1)-PEAMA(5%)-BDMA(1%) | 80-157 | 124 | 246 | 148 | 0,15 |
| TGPh-THPA (R=1)-PEAMA(10%)-BDMA(1%) | 90-175 | 134 | 270 | 109/240 | 0,32 |
| TGPh-SA (R=1)-PEAMA(5%)-1MIM(0,25%) | 100-189 | 150 | 389 | 135 | 0.29 |
| TGPh-THPA (R=1)-PEAMA(5%)-1MIM(0,25%) | 90-170 | 142 | 312 | 141 | 0.27 |
| TGPh-PA (R=1)-PEAMA(5%)-1MIM(0,25%) | 80-181 | 132 | 285 | 171 | 0.30 |
| TGPh-SA (R=1)-PEAMA(5%)-1MIM(0,35%) | 93-180 | 144 | 328 | 137 | 0.25 |
| TGPh-THPA (R=1)-PEAMA(5%)-1MIM(0,35%) | 86-165 | 138 | 322 | 145 | 0.29 |
| TGPh-PA (R=1)-PEAMA(5%)-1MIM(0,35%) | 80-175 | 131 | 253 | 175 | 0.30 |
| TGPh-SA (R=1)-PEAMA(5%)-BDMA(1%) | 95-220 | 151 | 309 | 100 | 0.24 |
| TGPh-(MA-THPA 50:50) (R=1)-BDMA(1%) | 85-157 | 140 | 350 | 157 | 0,33 |
| TGPh-(MA-PA 50:50) (R=1)-BDMA(1%) | 80-160 | 135 | 317 | 165 | 0,24 |
| TGPh-(IA-THPA 50:50) (R=1)-BDMA(1%) | 90-173 | 137 | 331 | 142 | 0,31 |
| TGPh-(IA-PA 50:50) (R=1)-BDMA(1%) | 80-178 | 136 | 332 | 172 | 0,24 |
| TGPh-(MA-PA 50:50) (R=1)-1MIM(0,35%) | 85-166 | 142 | 334 | 157 | 0,23 |
| TGPh-(IA-PA 50:50) (R=1)-1MIM(0,35%) | 90-183 | 139 | 317 | 174 | 0,21 |
| TGPh-(MA-THPA 50:50) (R=1)-PEAMA(5%)-BDMA(1%) | 90-163 | 141 | 345 | 166 | 0,23 |
| TGPh-(SA-THPA 50:50) (R=1)-PEAMA(5%)-BDMA(1%) | 90-168 | 139 | 367 | 114 | 0,03 |
| TGPh-(MA-PA 50:50) (R=1)-PEAMA(5%)-BDMA(1%) | 85-159 | 134 | 317 | 176 | 0,05 |
| TGPh-(IA-THPA 50:50) (R=1)-PEAMA(5%)-BDMA(1%) | 90-173 | 138 | 321 | 143 | 0,22 |
| TGPh-(IA-PA 50:50) (R=1)-PEAMA(5%)-BDMA(1%) | 85-174 | 135 | 299 | 156 | 0,23 |
| TGPh-(MA-THPA 50:50) (R=1)-PEAMA(5%)-1MIM(0,35%) | 80-168 | 146 | 358 | 146 | 0,23 |
| TGPh-(SA-THPA 50:50) (R=1)-PEAMA(5%)-1MIM(0,35%) | 95-169 | 142 | 328 | 132 | 0,21 |
| TGPh-(MA-PA 50:50) (R=1)-PEAMA(5%)-1MIM(0,35%) | 85-168 | 141 | 305 | 175 | 0,17 |
| TGPh-(IA-THPA 50:50) (R=1)-PEAMA(5%)-IMIM(0,35%) | 95-190 | 143 | 340 | 173 | 0,31 |
| TGPh-(IA-PA 50:50) (R=1)-PEAMA(5%)-1MIM(0,35%) | 90-186 | 140 | 311 | 190 | 0,21 |
| TGPh-(SA-THPA 25:75)(R=1)-BDMA(1%) | 90-155 | 135 | 343 | 114 | 0,22 |
| TGPH-(MA-PA 25:75)(R=1)-BDMA(1%) | 80-165 | 132 | 308 | 151 | 0,31 |
| TGPh-(IA-THPA 25:75)(R=1)-BDMA(1%) | 85-162 | 132 | 337 | 133 | 0,2 |
| TGPh-(IA-PA 25:75)(R=1)-BDMA(1%) | 80-160 | 127 | 298 | 150 | 0,24 |
| TGPh-(MA-THPA 25:75)(R=1)-1MIM(0,35%) | 95-169 | 144 | 371 | 137 | 0,18 |
| TGPh-(SA-THPA 25:75)(R=1)-1MIM(0,35%) | 95-175 | 143 | 372 | 147 | 0,25 |
| TGPh-(MA-THPA 25:75)(R=1)-PEAMA(5%)-1MIM(0,35%) | 85-165 | 143 | 349 | 148 | 0,18 |

### Example 2: Comparative data - Preparation and characterization of thermoset resins based on only one anhydride monomer.

Systems based on one multifunctional aromatic epoxy monomer crosslinked with only one anhydride were synthetized. A stoichiometric ratio R=1 between epoxy: anhydride groups was used. The epoxy monomer was heated on a heating plate at 60 °C until the compound decreased its viscosity. The anhydride was added to the epoxy compound and kept under continuous stirring until melting, and the mixture became homogeneous. The epoxy-anhydride mixture was removed from the heating plate, cooled down to room temperature, and then combined with initiator. The mixtures were poured into silicone molds and cured in oven, following the next curing protocol:
- at 120 °C for 3 hour;
- at 160 °C for 1 hour;
- at 180 °C for 2 hours (post-curing).

Table 4 below summarizes the physico-chemical and thermo-mechanical properties of three thermoset resins based on multifunctional epoxy monomer crosslinked with only one anhydride.

Table 4 shows that, compared to the resins included in this invention (see e.g. Tables 1 to 3), the systems with only one anhydride present the disadvantage of slightly higher temperatures and longer periods of time for the crosslinking process. In industry:
- higher maximum reaction temperature (*T*ₚₑₐₖ) is a disadvantage because lead to higher processing temperatures;
- higher reaction temperature interval (*T*ₒₙₛₑₜ -*T*_{end}) is a disadvantage because leads to an increase in processing temperatures, an increase in energy consumption and therefore an increase in the cost of production; and
- higher reaction enthalpy (Δ*H* [J.g⁻¹])is a disadvantage, because the crosslinking of the resins is faster and thus the processing and manufacturing time of the various components (e.g. composites through the pre-preg process) is reduced.

Based on DSC data, the thermoset resins crosslinked with at least two anhydrides have improved maximum reaction temperature (*T*ₚₑₐₖ), and/or improved reaction temperature interval (*T*ₒₙₛₑₜ -*T*_{end}), and/or improved reaction enthalpy.

The crosslink density (*v*) and the average molecular weight between crosslinks (*M*_{c}) of the selected systems were calculated proving the presence of stiff systems (*v* = 5.23-8.76 mmol·cm⁻³ ; *M*_{c} = 148-247 g/mol). A selection of systems crosslinked with a single anhydride present lower crosslink densities and higher average molecular weight between crosslinks compared to those present in this invention, demonstrating slightly lower rigidities.

Glass transition temperature (*T*_{g}) of the thermoset resins were determined by DSC technic (*T*_{g-DSC}) and by DMA technic (*T*_{α} - maximum temperature of the damping factor peak). It is shown that systems crosslinked with a single anhydride have a slightly lower glass transition temperatures (*T*_{g-DSC} = 123-128 °C; *T*_{α} = 132-160 °C), demonstrating lower stiffness.

The water absorption (WA%) of the thermoset resins crosslinked with only one anhydride is superior to 0.3%, being higher than that of the thermoset materials from the present invention and without respecting the space industrial criteria (≤ 0.3%).

The Biobased Carbon Content (BCC) and Biobased Organic Carbon (BOC) content of the thermoset resins crosslinked with only one anhydride are ranged between BCC = 99.24-99.35% ; BOC = 99.61-99.70%, being lower than the values obtained for the thermoset resins developed with at least two anhydrides.

**Table 4. Example of physico-chemical and thermo-mechanical properties of three thermoset resins based on multifunctional epoxy monomer crosslinked with only one anhydride**

| | **TGPh-MA-BDMA (0.5%)** | **TGPh-PA-BDMA (0.5%)** | **TGPh-THPA-BDMA (0.5%)** |
|---|---|---|---|
| **Tₒₙₛₑₜ -T_{end} [°C]** | **60-230** | **80-230** | **70-190** |
| **Tₚₑₐₖ [°C]** | **142** | **144** | **143** |
| **ΔH [J.g⁻¹]** | **365** | **347** | **398** |
| **Density [g/cm³]** | **1.3** | **1.29** | **1.29** |
| **Shore D hardness** | **89** | **87** | **89** |
| **E' at 25 °C [GPa]** | **3.2** | **3** | **3.1** |
| **E' at 250 °C [MPa]** | **110** | **66** | **62** |
| **T_{g -DSC} [°C]** | **128** | **123 ^{_}** | **127** |
| **T_{α} [°C]** | **160** | **143** | **132** |
| **υ [mmol·cm⁻³]** | **8.76** | **5.44** | **5.23** |
| **M_{c} [g/mol]** | **148** | **237** | **247** |
| **Gel Content [%]** | **99.98** | **99.89** | **99.92** |
| **WA% at 24h [%]** | **0.30** | **0.31** | **0.33** |
| **BCC [%]** | **99.24** | **99.35** | **99.35** |
| **BOC [%]** | **99.61** | **99.70** | **99.70** |

## Claims

1. A thermoset resin composition comprising:
a. at least one aromatic multifunctional epoxy monomer; and
b. at least two different anhydride monomers selected from the group consisting of Methyl nadic anhydride (MNA), Cis-1,2,3,6-Tetrahydrophthalic anhydride (THPA), (2-Dodecen-1-yl)succinic anhydride (2DSA), Hexahydrophthalic anhydride (HHPA), Glutaric anhydride (GA), Hexahydro-4-methylphtalic anhydride (HMPA), Phthalic anhydride (PhA or PA), Succinic anhydride (SA), 3,3-Dimethylglutaric anhydride (DMGA), 1-Octenylsuccinic anhydride (OSA), Maleic Anhydride (MA), Poly(ethylene-alt-maleic anhydride) (PEAMA), Trimellitic anhydride (TA), and Itaconic Anhydride (IA).

2. The thermoset resin composition of claim 1, wherein the aromatic multifunctional epoxy monomer is selected from the group consisting of Triglycidyl ether of phloroglucinol (TGPh), Triglycidyl ether of naringenin (TGEN), Diglycidyl ether of vanillyl alcohol (DGEVA), Tris(4-hydroxyphenyl)methane triglycidyl ether (THPMTGE), Resorcinol Diglycidyl Ether (RDGE), and Diglycidyl 1.2-cyclohexanedicarboxylate (DGPH); preferably TGPh, TGEN, DGEVA, and RDGE.

3. The thermoset resin composition of claim 1 or 2, wherein the first and the second anhydride monomers b) is selected from the group consisting of THPA, PA, SA, MA, PEAMA, TA, GA, and IA, preferably MA, IA, THPA, and SA.

4. The thermoset resin composition of any one of claims 1 to 3, wherein said composition comprises TGPh as epoxy monomer a); a first anhydride monomer b) selected from the group consisting of MA, SA, TA, THPA, PA and IA; and a second anhydride monomer b) being PEAMA.

5. The thermoset resin composition of any one of claims 1 to 4, wherein said composition comprises TGPh as epoxy monomer a); a first anhydride monomer b) selected from the group consisting of MA, SA, TA, THPA, PA and IA; a second anhydride monomer b) selected from the group consisting of MA, SA, TA, THPA, PA and IA; and a third anhydride monomer b) being PEAMA; provided that the first and the second anhydride monomers are different from each other.

6. The thermoset resin composition of any one of claims 1 to 5, wherein the weight ratio between the first and the second anhydride monomer is between 5:95 and 95:5, preferably between 10:90 and 90:10, preferably between 20:80 and 80:20, more preferably between 25:75 and 75:25, even more preferably 50:50.

7. The thermoset resin composition of any one of claims 1 to 6, wherein the molar ratio of epoxy functional groups : anhydride functional groups is from 0.5 to 1.5, preferably from 0.8 to 1.

8. The thermoset resin composition of any one of claims 1 to 7, wherein said composition further comprises an initiator such as 1-Methylimidazole (1MIM), 2-Ethyl-4-methylimidazole (2E4M), or N,N-Dimethylbenzylamine (BDMA).

9. A method for preparing a thermoset resin comprising a step of preparing a thermoset resin composition by mixing a) at least one aromatic multifunctional epoxy monomer with b) at least two different anhydride monomers selected from the group consisting of Methyl nadic anhydride (MNA), Cis-1,2,3,6-Tetrahydrophthalic anhydride (THPA), (2-Dodecen-1-yl)succinic anhydride (2DSA), Hexahydrophthalic anhydride (HHPA), Glutaric anhydride (GA), Hexahydro-4-methylphtalic anhydride (HMPA), Phthalic anhydride (PhA or PA), Succinic anhydride (SA), 3,3-Dimethylglutaric anhydride (DMGA), 1-Octenylsuccinic anhydride (OSA), Maleic Anhydride (MA), Poly(ethylene-alt-maleic anhydride) (PEAMA), Trimellitic anhydride (TA), and Itaconic Anhydride (IA); and at least one curing step.

10. The method of claim 9, wherein the step of reacting monomers a) and b) is carried out using an initiator such as 1-Methylimidazole (1MIM), 2-Ethyl-4-methylimidazole (2E4M), or N,N-Dimethylbenzylamine (BDMA).

11. The method of claim 9 or 10, wherein at least one curing step is carried out at a temperature between 60° and 200 °C.

12. The method of any one of claims 9 to 11, comprising a first curing step at a temperature between 60 and 150 °C, a second curing step (post-curing step) at a temperature between 150 and 180 °C, and optionally a third curing step at a temperature between 180 and 200 °C

13. A thermoset resin or material comprising a cured thermoset resin composition as defined in any one of claims 1 to 8.

14. A bio-composite material comprising a cured thermoset resin composition as defined in any one of claims 1 to 8.
